(19) Europäisches Patentamt
European Patent Office
Office européen des brevets

(11) **EP 2 191 583 B1**

## (12) FASCICULE DE BREVET EUROPEEN

(45) Date de publication et mention
de la délivrance du brevet:
**23.02.2011 Bulletin 2011/08**

(21) Numéro de dépôt: **08838155.3**

(22) Date de dépôt: **05.09.2008**

(51) Int Cl.:
*H04B 7/02* (2006.01)   *H04L 1/06* (2006.01)
*H04L 25/20* (2006.01)

(86) Numéro de dépôt international:
**PCT/FR2008/051580**

(87) Numéro de publication internationale:
**WO 2009/047415 (16.04.2009 Gazette 2009/16)**

(54) **CODAGE SPATIO-TEMPOREL POUR SYSTEME COOPERATIF**

RAUM-ZEIT-KODIERUNG FÜR KOOPERATIVE SYSTEME

SPACE-TIME CODING FOR COOPERATIVE SYSTEMS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **14.09.2007 FR 0757576**

(43) Date de publication de la demande:
**02.06.2010 Bulletin 2010/22**

(73) Titulaire: **FRANCE TELECOM**
**75015 Paris (FR)**

(72) Inventeurs:
• **SAADANI, Ahmed**
**F-92130 Issy les Moulineaux (FR)**
• **HUCHER, Charlotte**
**F-75013 Paris (FR)**
• **REKAYA, Ghaya**
**F-92160 Antony (FR)**

(74) Mandataire: **Bloch & Bonnétat**
**23bis, rue de Turin**
**75008 Paris (FR)**

(56) Documents cités:
**US-A1- 2006 239 222**

• **ANGHEL P A ET AL: "Multi-user space-time coding in cooperative networks" IEEE INTERNATIONAL CONFERENCE ON ACOUSTICS, SPEECH, AND SIGNAL PROCESSING, vol. 4, 6 avril 2003 (2003-04-06), - 10 avril 2003 (2003-04-10) pages IV_73-IV_76, XP010641099 NY, US ISBN: 978-0-7803-7663-2**
• **ADRIAN AGUSTIN ET AL: "Hybrid Turbo FEC/ARQ Systems and Distributed Space-Time Coding for Cooperative Transmission" INTERNATIONAL JOURNAL OF WIRELESS INFORMATION NETWORKS, KLUWER ACADEMIC PUBLISHERS-PLENUM PUBLISHERS, vol. 12, no. 4, 1 décembre 2005 (2005-12-01), pages 263-280, XP019279725 NE ISSN: 1572-8129**

**Description**

La présente invention concerne un codage spatio-temporel pour un système coopératif.

Plus particulièrement, l'invention s'applique aux systèmes de communications radio dans lesquels des entités coopèrent et constituent des noeuds d'un réseau de télécommunications. Ces noeuds peuvent être des terminaux mobiles, des noeuds au coeur du réseau ou encore des stations de base.

Les noeuds se répartissent en trois groupes : les noeuds sources, les noeuds relais et les noeuds destinataires. Chaque noeud source transmet un ou des signaux contenant de l'information à transmettre directement et via un ou des noeuds relais à au moins un noeud destinataire. Après traitement des signaux reçus, chaque noeud relais retransmet les signaux traités vers le noeud destinataire qui détermine une information la plus similaire à l'information initiale en fonction des signaux provenant respectivement du noeud source et des noeuds relais. Un signal transmis sur un canal de radiocommunications depuis un noeud source vers un noeud destinataire est fortement affecté par les interférences et les évanouissements liés aux obstacles et aux trajets multiples. Ainsi la transmission d'une seule réplique du signal peut s'avérer insuffisante pour décoder l'information contenue dans le signal. Un système coopératif pallie cette insuffisance en diversifiant les chemins suivis par le signal émis par le noeud source par multiplication de celui-ci via des noeuds relais. A la réception, le noeud destinataire récupère diverses répliques du signal affectées par divers évanouissements.

Un traitement des signaux reçus dans un noeud relais relatif à l'invention correspond au protocole de décodage et transmission DF ("Decode and Forward" en anglais). Ce protocole comprend un décodage du signal reçu afin de corriger les erreurs de transmission dues à la qualité du canal de transmission entre le noeud source et le noeud relais, un codage du signal corrigé, puis une transmission du signal corrigé codé au noeud destinataire. Afin de transmettre sans erreur le signal, le noeud relais doit assurer un décodage correct. Le protocole DF est donc soumis, entre autres, à la qualité du canal de transmission entre le noeud source et les noeuds relais. Un noeud relais n'est utilisé que si le canal le reliant au noeud source est de bonne qualité. Dans le cas où tous les canaux source-relais sont de mauvaise qualité, la coopération entre les noeuds n'intervient pas.

Le codage spatio-temporel a été développé initialement pour les systèmes à antennes multiples, dit également à entrée et sortie multiple MIMO ("Multiple Input - Multiple Output" en anglais), mais il se révèle très utile pour des stratégies de coopération. En effet, on peut considérer théoriquement un noeud source et les noeuds relais comme un seul et unique noeud source virtuel à plusieurs antennes d'émission.

L'évaluation d'un code spatio-temporel est basée sur deux paramètres principaux que sont le rendement et la diversité du code.

Le rendement d'un code est la quantité d'information transmise par unité de temps et s'exprime généralement en symboles par utilisation de canal (symb. pcu). Plus le rendement est élevé, plus le débit de transmission est important. Le rendement est plein quand il est maximal pour un système donné.

Pour un système à $a_e$ antennes d'émission et $a_r$ antennes de réception, le rendement plein est atteint pour R = min$\{a_e, a_r\}$.

Dans un système coopératif avec un noeud source, N noeuds relais et un noeud destinataire, le rendement plein est atteint pour R = 1.

La diversité d'un code est définie comme le nombre de chemins indépendants traversés par le signal d'information entre le noeud source et le noeud destinataire. Plus la diversité est grande, meilleure est la qualité de la transmission. La diversité est pleine quand elle est maximale pour un système donné.

Pour un système à $a_e$ antennes d'émission et $a_r$ antennes de réception, la diversité pleine est atteinte pour d = $a_e$ $a_r$.

Dans le système coopératif avec un noeud source, N noeuds relais et un noeud destinataire, la diversité pleine est d = N+1.

Un exemple de code spatio-temporel, les codes TAST ("Threaded Algebraic Space-Time" en anglais), est basé sur un codage spatio-temporel algébrique en couches. Une couche est une combinaison de symboles d'information à transmettre depuis un émetteur vers un récepteur, les couches du code combinant des symboles différents. Chaque couche est associée à un sous-espace algébrique propre et différent de ceux des autres couches pour supprimer les interférences avec les autres couches. A chaque utilisation de canal, chaque antenne d'émission transmet un symbole d'une couche différente de celle des autres antennes d'émission et de celles des autres utilisations de canal vers les antennes du récepteur. Ainsi, chaque symbole est envoyé une fois par chaque antenne, et une fois à chaque utilisation de canal, ce qui produit de la diversité spatio-temporelle.

Des systèmes coopératifs connus sont déjà basés sur le protocole DF.

Un premier système se réfère au protocole LTW-DF, du nom de ses inventeurs Laneman, Tse et Wornell, mis en oeuvre pour des transmissions à accès multiple par division de temps TDMA ("Time Division Multiple Access" en anglais). C'est un protocole orthogonal dans lequel deux noeuds communiquant ensemble ne peuvent transmettre des données en même temps. La coopération entre les noeuds se déroule en deux phases de même durée pour transmettre un symbole d'information depuis un noeud source vers un noeud destinataire via un noeud relais. Lors de la première phase, le noeud source émet dans un premier signal un symbole vers le noeud relais et le noeud destinataire. Pendant la deuxième phase, après avoir traité le premier signal, le noeud relais retransmet le symbole dans un deuxième signal vers le noeud destinataire. A partir de ces signaux bruités contenant le symbole, le noeud destinataire détermine un symbole similaire au symbole initial. Chaque symbole d'information du noeud source est retransmis par un seul noeud relais au noeud destinataire ; ainsi le deuxième symbole d'information est relayé via un deuxième noeud relais au noeud destinataire.

La diversité du premier système est pleine. Tous les symboles d'information sont transmis par deux noeuds différents, le noeud source et un noeud relais vers le noeud destinataire. Cependant le rendement est faible puisque seul un demi-symbole est transmis lors d'une utilisation de canal.

Un deuxième système se réfère au protocole NBK-DF, également du nom de ses inventeurs Nabar, Bolcskei et Kneubuhler. Ce protocole est non-orthogonal : un noeud source et un noeud relais peuvent émettre en même temps. La coopération entre les noeuds comprend également deux phases fixes de même durée pour transmettre une information comprenant deux symboles depuis le noeud source via un noeud relais vers un noeud destinataire. Lors de la première phase, le noeud source émet un premier symbole vers le noeud relais et le noeud destinataire. Pendant la seconde phase, le noeud source émet le deuxième symbole d'information indépendant du premier vers le noeud destinataire, et le noeud relais retransmet le premier symbole traité vers le noeud destinataire. Le noeud destinataire décode les deux symboles à partir des deux signaux reçus pendant les deux phases pour déterminer l'information.

Un symbole sur deux étant retransmis par le noeud relais, la diversité de ce protocole n'est pas pleine et reste celle d'une transmission directe pour le deuxième symbole transmis directement par le noeud source au noeud destinataire. Cependant, le protocole NBK-DF assure un rendement plein puisque deux symboles sont transmis au noeud destinataire lors de deux utilisations canal, c'est-à-dire un symbole par utilisation de canal.

Un troisième système se réfère au protocole DDF qui est un protocole DF dynamique pour transmettre une première information et une deuxième information dépendant de la première depuis un noeud source vers un noeud destinataire via un noeud relais selon deux phases de transmission. La durée de ces deux phases de transmission varie en fonction de la qualité du canal reliant le noeud source et le noeud relais. La durée de la première phase est choisie de telle façon que le noeud relais puisse décoder l'information transmise. Plus le canal est de bonne qualité, plus la première phase de transmission vers le noeud relais est courte. Au contraire, si le canal est défectueux, la première phase est rallongée et peut aller jusqu'à supprimer la deuxième phase pour revenir au cas non-coopératif. Lors de la première phase, le noeud source envoie la première information au noeud relais et au noeud destinataire. Pendant la deuxième phase, le noeud source envoie la deuxième information dépendant de la première au noeud destinataire, et le noeud relais renvoie la première information reçue et traitée au noeud destinataire. Le noeud destinataire détermine l'information initiale à partir des deux informations transmises.

Seul le protocole DDF obtient une diversité et un rendement pleins pour un protocole DF : l'information est transmise par le noeud source et le noeud relais au noeud destinataire, et deux symboles sont transmis pendant deux utilisations canal. Cependant, il reste très complexe à implémenter dans un système réel. En effet, la durée variable de ses deux phases impose que le noeud source et les noeuds relais puissent moduler les signaux dans différentes constellations afin de transmettre deux informations dépendantes. Par ailleurs, une signalisation des débuts et de la fin des phases variables est nécessaire pour chaque utilisation du canal.

Aucun des trois systèmes coopératifs précédents selon les protocoles LTW-DF, NBK-DF et DDF n'est basé sur des codes spatio-temporels.

Un protocole DF basé sur un code spatio-temporel, appelé code Alamouti, intervient dans un système coopératif à un seul noeud relais. C'est un protocole non-orthogonal comportant deux phases de même durée. Lors de la première phase, le noeud source envoie simultanément les premier et deuxième symboles d'information au noeud relais et au noeud destinataire. Lors de la deuxième phase, le noeud source envoie simultanément l'opposé du symbole conjugué du deuxième symbole et le symbole conjugué du premier symbole. Le noeud relais décode les premier et deuxième symboles reçus durant la première phase, et les retransmet au noeud destinataire. A la fin de la première phase, le noeud source et le noeud relais sont considérés comme deux antennes virtuelles d'une même source. Le protocole Alamouti distribué permet d'obtenir une diversité pleine, chaque symbole étant transmis via le noeud source et le noeud relais, mais le rendement reste faible.

En outre ce protocole n'est défini que pour un système coopératif avec un seul noeud relais. Une généralisation à plusieurs relais avec d'autres codes orthogonaux ou même pseudo-orthogonaux fait chuter le rendement.

Un tel procédé de codage est décrit dans le document cité à la fin de la description.

La présente invention remédie aux inconvénients évoqués ci-dessus par un procédé pour coder des symboles d'information dans un système coopératif comportant un noeud source, N noeuds relais et un noeud destinataire, l'entier N étant au moins égal à un. Le procédé est caractérisé en ce qu'il comprend :

    un codage dans le noeud source des symboles d'information par combinaisons desdits symboles en des éléments codés répartis selon une matrice spatio-temporelle, les éléments codés de chacune des lignes et colonnes de la matrice dépendant respectivement des combinaisons desdits symboles,

des transmissions de N premières lignes d'éléments codés de la matrice depuis le noeud source vers les N noeuds relais et le noeud destinataire,

une correction des N premières lignes respectivement en N premières lignes corrigées dans les noeuds relais,

des transmissions de N dernières lignes d'éléments codés de la matrice depuis le noeud source vers le noeud destinataire, et

des transmissions des N premières lignes corrigées respectivement depuis les N noeuds relais vers le noeud destinataire.

Le procédé de codage spatio-temporel selon l'invention présente un rendement maximal et une diversité de coopération maximale dans un système coopératif. Chaque noeud relais reçoit les N lignes contenant $2N^2$ éléments codés résultant chacun de la combinaison d'une partie distincte des $4N^2$ symboles d'information. Ainsi chaque symbole d'information est transmis par chacun des noeuds relais du système et par le noeud source. La diversité est donc pleine.

En outre, $4N^2$ symboles sont transmis sur $4N^2$ utilisations de canal. Le rendement du système est donc plein.

Selon une caractéristique de l'invention, la correction des éléments codés de l'une des N premières lignes reçues dans un noeud relais comprend une corrélation entre les éléments codés des N premières lignes reçues et des éléments codés prédéterminés.

La correction des éléments codés dans les noeuds relais a pour avantage de réduire le taux d'erreurs des symboles reçus par le noeud destinataire. La correction s'effectue seulement au niveau des éléments codés reçus sans traiter individuellement des symboles qui sont à décoder ultérieurement dans le noeud destinataire. Une telle correction permet un traitement plus rapide des lignes d'éléments codés dans les noeuds relais que si chaque noeud relais devait préalablement décoder les éléments codés en symboles pour corriger ces derniers, puis recoder les symboles corrigés en éléments codés corrigés.

Selon une autre caractéristique de l'invention, le procédé comprend dans le noeud destinataire des combinaisons deux à deux des N premières lignes corrigées dans les noeuds relais aux N dernières lignes transmises par le noeud source en des lignes combinées, et une constitution d'une matrice résultante avec les premières lignes transmises par le noeud source et les lignes combinées. Les symboles sont ainsi obtenus en dépendance notamment de la matrice résultante et d'une matrice de transfert relative aux canaux entre les noeuds.

L'invention a aussi pour objet un système coopératif pour coder des symboles d'information et comportant un noeud source, N noeuds relais et un noeud destinataire, N étant au moins égal à un. Le système est caractérisé en ce qu'il comprend :

un moyen pour coder dans le noeud source les symboles d'information par combinaisons desdits symboles en des éléments codés répartis selon une matrice spatio-temporelle, les éléments codés de chacune des lignes et colonnes de la matrice dépendant respectivement des combinaisons desdits symboles,

un moyen pour transmettre N premières lignes d'éléments codés de la matrice depuis le noeud source vers les N noeuds relais et le noeud destinataire,

un moyen pour corriger des N premières lignes respectivement en N premières lignes corrigées dans les noeuds relais,

un moyen pour transmettre N dernières lignes d'éléments codés de la matrice depuis le noeud source vers le noeud destinataire, et

un moyen pour transmettre N premières lignes corrigées respectivement depuis les N noeuds relais vers le noeud destinataire.

L'invention a aussi pour objet un noeud source et un noeud relais compris dans le système coopératif.

Le noeud source est caractérisé en ce qu'il comprend :

un moyen pour coder les symboles d'information par combinaisons desdits symboles en des éléments codés répartis selon une matrice spatio-temporelle, les éléments codés de chacune des lignes et colonnes de la matrice dépendant respectivement des combinaisons desdits symboles,

un moyen pour transmettre N premières lignes d'éléments codés de la matrice depuis le noeud source vers les N noeuds relais et le noeud destinataire, et

un moyen pour transmettre N dernières lignes d'éléments codés de la matrice depuis le noeud source vers le noeud destinataire.

Le noeud relais également compris dans le système coopératif est caractérisé en ce qu'il comprend :

un moyen pour recevoir N lignes d'éléments codés résultant du codage dans le noeud source des symboles d'information par combinaisons desdits symboles en les éléments codés répartis selon une matrice spatio-temporelle, les éléments codés de chacune des lignes et colonnes de la matrice dépendant respectivement des combinaisons desdits symboles,

un moyen pour corriger une des N lignes reçues en une ligne corrigée à partir des N lignes reçues, et

un moyen pour transmettre la ligne corrigée vers le noeud destinataire.

Enfin, l'invention se rapporte à des programmes d'ordinateur aptes à être mis en oeuvre respectivement dans un noeud source et des noeuds relais d'un système coopératif pour coder des symboles d'information, lesdits programmes comprenant des instructions qui, lorsque les programmes sont exécutés respectivement dans lesdits noeuds du système, réalisent des étapes conformes au procédé de l'invention.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :

- la figure 1 est un bloc-diagramme schématique d'un système coopératif selon l'invention ;
- la figure 2 est un algorithme d'un procédé de codage spatio-temporel pour un système coopératif, selon l'invention ;
- la figure 3 est un diagramme d'une constellation de modulation initiale ; et
- la figure 4 est un diagramme d'une constellation de modulation codée.

L'invention a trait aux codes spatio-temporels algébriques à diversité et rendement pleins dans un système coopératif dans lequel les noeuds relais appliquent le protocole DF.

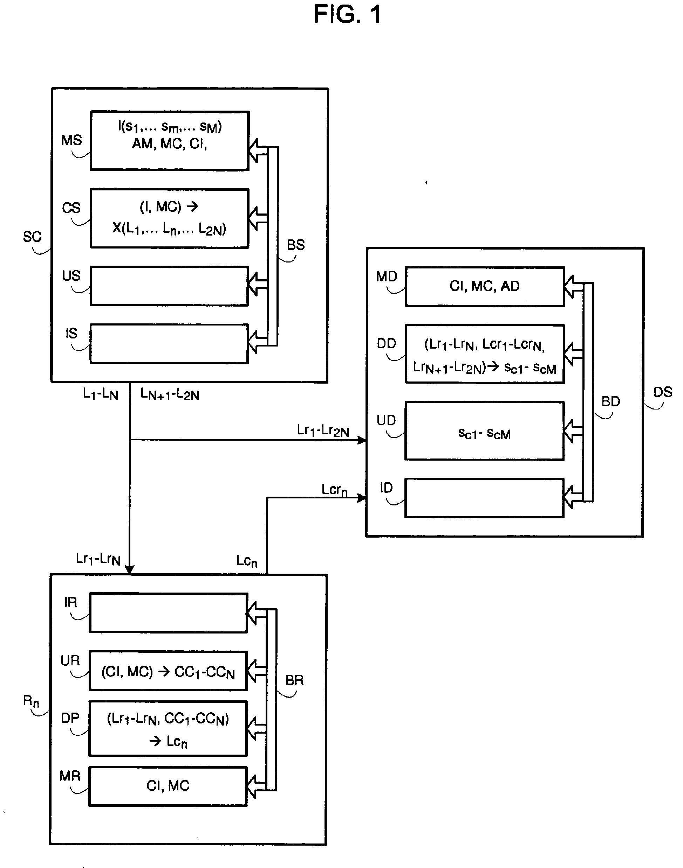

En référence à la figure 1, un système coopératif comprend au moins un noeud source SC, un noeud destinataire DS et N noeud relais $R_1$ à $R_N$, avec N un entier au moins égal à 1. Un seul noeud relais $R_n$, avec $1 \leq n \leq N$, est illustré à la figure 1 afin de ne pas la surcharger.

Chacun des noeuds SC, DS et $R_n$ selon l'invention est représenté à la figure 1 sous forme de blocs fonctionnels dont la plupart assurent des fonctions ayant un lien avec l'invention et peuvent correspondre à des modules logiciels implémentés dans au moins un processeur et/ou à des modules matériels dédiés ou programmables dans le noeud.

Le noeud source SC est par exemple une station de base d'un réseau de radiocommunications et comprend une interface de communication IS, une unité de traitement US, un codeur CS et une mémoire MS reliés par un bus bidirectionnel BS.

La mémoire MS comporte au moins une information I, un algorithme de modulation AM et une matrice de conversion MC servant à convertir une suite de symboles en des éléments codés constituant un mot de code spatio-temporel X. L'information I comprend M symboles $s_1$ à $s_M$ à transmettre au noeud destinataire DS via les noeuds relais $R_1$ à $R_N$.

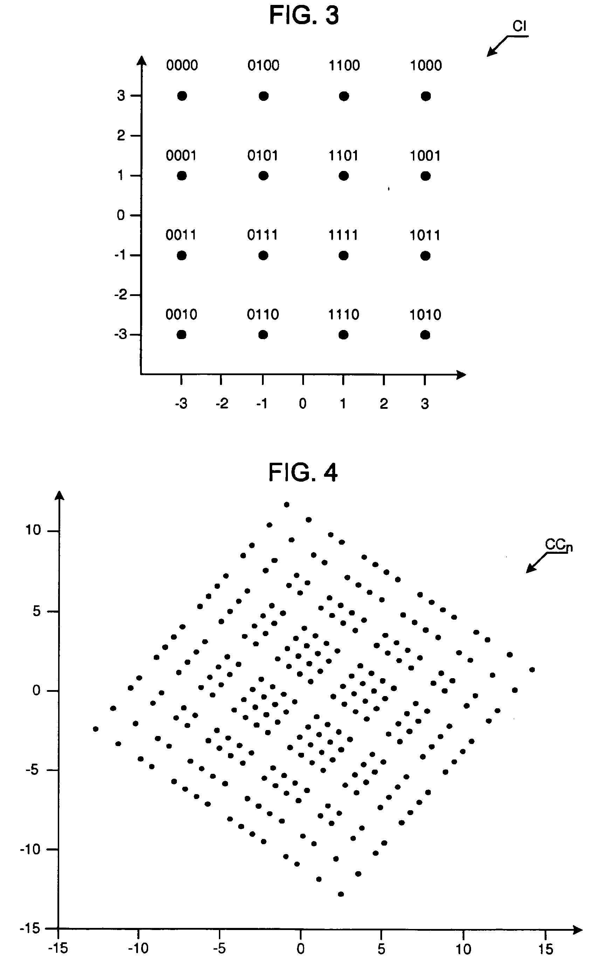

L'algorithme de modulation AM est relatif par exemple à une modulation d'amplitude en quadrature de phase QAM ("Quadrature Amplitude Modulation" en anglais) représentée sous forme d'une constellation appelée dans la suite de la description constellation initiale CI et mémorisée dans la mémoire MS. La constellation CI comprend $2^B$ états d'amplitude et de phase associés à des symboles à B bits, telle que la modulation QAM à 16 états illustrée à la figure 3.

La matrice de conversion MC combine les M symboles $s_1$ à $s_M$ en des combinaisons de symboles $X_1$ à $X_{2N}$ dépendant chacune de 2N symboles afin de transmettre une ligne à 2N éléments codés dans une matrice spatio-temporelle carrée X définie ci-après, correspondant à tous les $M = (2N)^2$ symboles $s_1$ à $s_M$ pendant une utilisation du canal entre le noeud source et un autre noeud. N premières lignes d'éléments codés du mot de code constitué par la matrice spatio-temporelle $[X] = [MC] [s_1$ à $s_M]^T$ sont transmises par le noeud source aux N noeuds relais et au noeud destinataire, et N dernières lignes d'éléments codés de la matrice sont transmises directement par le noeud source au noeud destinataire.

Pour un système coopératif à N noeuds relais $R_1$ à $R_N$, un code spatio-temporel est de dimension $2N \times 2N$ et un mot de code X s'écrit sous la forme de la matrice spatio-temporelle carrée suivante :

$$ X = \begin{bmatrix} X_1 & X_2 & \cdots & X_{2N-1} & X_{2N} \\ \gamma\sigma(X_{2N}) & \sigma(X_1) & \cdots & \sigma(X_{2N-2}) & \sigma(X_{2N-1}) \\ \vdots & \vdots & \ddots & \vdots & \vdots \\ \gamma\sigma^{2N-2}(X_3) & \gamma\sigma^{2N-2}(X_4) & \cdots & \sigma^{2N-2}(X_1) & \sigma^{2N-2}(X_2) \\ \gamma\sigma^{2N-1}(X_2) & \gamma\sigma^{2N-1}(X_3) & \cdots & \gamma\sigma^{2N-1}(X_{2N}) & \sigma^{2N-1}(X_1) \end{bmatrix} = \begin{bmatrix} L_1 \\ L_2 \\ \vdots \\ L_{2N-1} \\ L_{2N} \end{bmatrix} $$

où :

- $X_n = \sum\limits_{j=1}^{2N} s_{n,j}\, \theta^j$ , avec $1 \le n \le 2N$,

est une des combinaisons à 2N symboles du corps $K = Q(i, \theta)$, qui peut constituer un élément codé, i étant le nombre complexe tel que $i^2 = -1$, θ étant un nombre algébrique, chaque combinaison $X_n$ dépendant d'une partie respective des symboles $s_1$ à $s_M$ de l'information I différente des autres parties de l'information I dont dépendent les autres combinaisons à 2N symboles $X_1$ à $X_{n-1}$ et $X_{n+1}$ à $X_{2N}$ ;
- $s_{n,1}$ à $S_{n,2N}$ sont des symboles d'information de l'information I fournis par le noeud source SC, l'information I comprenant en tout $M = (2N)^2$ symboles d'information ;
- σ est un générateur du groupe de Gallois $K/Q(i)$ ; et
- γ est un élément du corps K séparant les différentes lignes du mot de code X afin que le déterminant de la matrice du mot de code X ne s'annule pas.

Les 2N lignes et les 2N colonnes de la matrice du mot de code X comprennent chacune 2N éléments codés $X_{1,1} = X_1$ à $X_{2N,2N} = \sigma^{2N-1}(X_1)$ et dépendent ainsi chacune de tous les $(2N)^2$ symboles $s_1$ à $s_M$ de l'information I. Une fonction $\sigma^m$ avec $0 \le m \le 2N-1$ et $m = n-1$ est appliquée à toutes les 2N combinaisons à 2N symboles $X_1$ à $X_{2N}$ après m permutations circulaires de celles-ci pour constituer respectivement les éléments codés $X_{n,1}$ à $X_{n,2N}$ de la ligne $L_n$ de la matrice spatio-temporelle.

Selon une application relative à l'invention, le mot de code X est un code spatio-temporel TAST de dimension 4x4, ayant pour matrice :

$$ X = \begin{bmatrix} X_1 & X_2 & X_3 & X_4 \\ \phi\sigma(X_4) & \sigma(X_1) & \sigma(X_2) & \sigma(X_3) \\ \phi\sigma^2(X_3) & \phi\sigma^2(X_4) & \sigma^2(X_1) & \sigma^2(X_2) \\ \phi\sigma^3(X_2) & \phi\sigma^3(X_3) & \phi\sigma^3(X_4) & \sigma^3(X_1) \end{bmatrix} $$

avec : N = 2,

- $X_1 = s_1 + \theta s_2 + \theta^2 s_3 + \theta^3 s_4$,
- $X_2 = s_5 + \theta_6 + \theta^2 s_7 + \theta^3 s_8$,
- $X_3 = s_9 + \theta s_{10} + \theta^2 s_{11} + \theta^3 s_{12}$,
- $X_4 = s_{13} + \theta s_{14} + \theta^2 s_{15} + \theta^3 s_{16}$,
- $\theta = e^{i(\pi/8)}$, $\phi = e^{i(\pi/32)}$, et
- $\sigma(X_n(\theta)) = X_n(i\theta)$ .

Le codeur CS du noeud source applique la matrice du mot de code X aux symboles d'information $S_1$ à $S_M$ afin d'obtenir des lignes de mot de code $L_1$ à $L_{2N}$ dépendant des éléments codés $X_{1,1}$ à $X_{2N,2N}$ et ainsi des symboles $S_1$ à $S_M$.

L'interface de communication IS comprend une ou plusieurs antennes d'émission et de réception, et transmet des signaux aux interfaces de communication des autres noeuds du système coopératif. Ces signaux comprennent chacun une ligne de mot de code $L_n$ et/ou des données de signalisation SG pour implémenter une coopération entre les noeuds du système coopératif. Les données de signalisation comprennent par exemple un identificateur de la ligne de mot de code, un identificateur relatif à la modulation initiale AM et/ou un identificateur concernant le protocole d'échange de signaux entre les noeuds du système, ainsi que divers repères de synchronisation pour les lignes de la matrice et la matrice elle-même incluse dans une trame spatio-temporelle du flux d'informations transmis par le noeud source.

L'interface IS transmet les N premières lignes de mot de code $L_1$ à $L_N$ via des signaux pour que les N noeuds relais $R_1$ à $R_N$ et le noeud destinataire les traitent, et transmet les N dernières lignes de mot de code $L_{N+1}$ à $L_{2N}$ pour que le noeud destinataire DS les traite.

Chaque noeud relais $R_n$ est par exemple une station de base d'un réseau de radiocommunications et comprend une interface de communication IR, une unité de traitement UR, une unité de décodage partiel DP et une mémoire MR reliés par un bus bidirectionnel BR. Chaque noeud relais $R_n$ reçoit et traite les lignes $Lr_1$ à $Lr_N$ correspondant respectivement aux lignes $L_1$ à $L_N$ du mot de code émises par le noeud source, pour produire une version corrigée $Lc_n$ de la ligne $L_n$.

L'interface de communication IR du noeud relais $R_n$ comprend au moins une antenne d'émission et au moins de réception pour recevoir des signaux de l'interface IS du noeud source SC et pour émettre des signaux à une interface de communication ID du noeud destinataire. Pour chaque information codée dans le noeud source SC, l'interface de communication IR reçoit un signal bruité contenant les lignes $Lr_1$ à $Lr_N$ du mot de code. Après décodage partiel d'éléments codés dans les lignes reçues, l'interface IR transmet vers le noeud destinataire DS un signal contenant une ligne de mot de code corrigée $Lc_n$, chacun des N noeuds relais retransmettant une ligne de mot de code corrigée différente vers le noeud destinataire.

La mémoire MR du noeud relais $R_n$ comprend la constellation initiale CI relative à la modulation réalisée dans le noeud source et la matrice de conversion MC incluant les fonctions Id, $\sigma$, $\sigma^2$, ..., $\gamma$Id, $\gamma\sigma$, $\gamma\sigma^2$, ..., $\gamma\sigma^{2N-1}$ avec Id correspondant à une fonction identité, pour convertir la suite de combinaisons de symboles $X_1$ à $X_{2N}$ en le mot de code X. La constellation initiale CI et la matrice de conversion MC ont été préalablement transmises dans des signaux de données de signalisation $SG_n$ depuis le noeud source NS.

En variante, la mémoire MR comprend d'autres constellations relatives à des modulations initiales différentes disponibles pour coopérer avec d'autres noeuds sources du système coopératif.

L'unité de traitement UR du noeud relais détermine initialement des nouvelles constellations codées $CC_1$ à $CC_N$, à partir respectivement de la matrice de conversion MC et de la constellation initiale CI. Ces constellations $CC_1$ à $CC_N$ sont ensuite mémorisées dans la mémoire MR. Une constellation $CC_n$ correspond à 2N groupes à M = $(2N)^2$ états d'amplitude et de phase associés respectivement aux positions 1 à 2N des 2N éléments codés $X_{n,1}$ à $X_{n,2N}$ dans la ligne $L_n$ de la matrice du mot de code X. Les M = $(2N)^2$ états d'amplitude et de phase dans un groupe de la constellation $CC_n$ associé à la position d'un élément codé dans la ligne $L_n$ sont représentatifs de toutes les combinaisons de symboles de la constellation initiale CI. Par exemple pour la modulation QAM à M = $2^B$ = 16 états, chaque élément codé est comparé aux 256 états inscrits de la constellation $CC_n$ représentée à la figure 4.

La constellation codée $CC_n$ dépend de la fonction $\sigma^{n-1}$ de la ligne de mot de code $L_n$ de la matrice de conversion MC. Les unités de traitement UR des noeuds relais $R_1$ à $R_N$ déterminent toutes les constellations $CC_1$ à $CC_N$ puisque chaque noeud relais $R_n$ traite toutes les lignes de mot de code reçues $Lr_1$ à $Lr_N$ du mot de code X.

L'unité de décodage partiel DP détermine des éléments codés corrigés $Xc_{n,1}$ à $Xc_{n,N}$ correspondant à la ligne corrigée $Lc_n$ à transmettre, par corrélation entre les éléments codés des N lignes reçues $Lr_1$ à $Lr_N$ et les éléments codés des constellations codées $CC_1$ à $CC_N$.

Le noeud destinataire DS est par exemple une station de base d'un réseau de radiocommunications ou un terminal d'un usager comme un terminal mobile ou un ordinateur portable personnel. Le noeud destinataire DS comprend une interface de communication ID, une unité de traitement UD, un décodeur DD et une mémoire MD reliés par un bus bidirectionnel BD.

L'interface de communication ID comprend une antenne d'émission et de réception, et émet des signaux de données de signalisation vers les interfaces de communication des autres noeuds du système coopératif. L'interface de communication reçoit notamment les lignes $Lr_1$ à $Lr_N$ correspondant respectivement aux N premières lignes de mot de code transmises par le noeud source SC, les lignes $Lcr_1$ à $Lcr_N$ correspondant respectivement aux N premières lignes de mot de code corrigées $Lc_1$ à $Lc_N$ transmises par les N noeuds relais du système, et les lignes $Lr_{N+1}$ à $Lr_{2N}$ correspondant respectivement aux N dernières lignes de mot de code $L_{N+1}$ à $L_{2N}$ transmises par le noeud source SC.

La mémoire MD du noeud destinataire DS comprend la constellation initiale CI, la matrice de conversion MC et un algorithme de démodulation AD.

Le décodeur DD combine respectivement deux à deux les lignes $Lcr_1$ à $Lcr_N$ aux lignes $Lr_{N+1}$ à $Lr_{2N}$ en N lignes combinées. Par exemple, deux lignes $Lcr_n$ et $Lr_{N+n}$ sont combinées en une addition telle que : $(Lcr_n \times cf_n) + (Lr_{N+n} \times cf_{sc})$. $cf_n$ et $cf_{sc}$ sont des coefficients d'atténuation de gain du canal respectivement entre le noeud relais $R_n$ et le noeud destinataire, et entre le noeud source et le noeud destinataire. Le décodeur DD constitue une matrice résultante MR avec les N premières lignes transmises par le noeud source et les N lignes combinées afin d'appliquer la matrice de conversion MC selon l'équation suivante [MR] = [H] ( [MC] [SD]$^T$) + [B] dans laquelle H est une matrice de transfert relative aux canaux de transmission entre le noeud source et le noeud destinataire et entre les noeuds relais et le noeud destinataire, SD est un vecteur de symboles d'information à déterminer et B est une matrice de bruit. L'unité de traitement UD traite spécifiquement l'information reçue et décodée en fonction du type de noeud destinataire. L'information est par exemple un message vidéo à afficher sur un écran du noeud destinataire.

Toutes les interfaces IS, IR et ID des noeuds du système fonctionnent à l'alternat ("half-duplex" en anglais). Chaque interface ne peut recevoir un signal et en émettre un autre en même temps. La transmission des signaux peut se faire selon plusieurs techniques d'accès.

En utilisant la technique d'accès TDMA ("Time Division Multiple Access" en anglais), le noeud source et un noeud relais coopèrent en deux étapes. Pendant la première étape, le noeud source émet un signal vers le noeud relais. Pendant la deuxième étape, le noeud relais traite le signal reçu pour le corriger et transmet le signal corrigé au noeud destinataire.

En utilisant la technique d'accès multiple par division de fréquence FDMA ("Frequency Division Multiple Access" en anglais), le noeud source et un noeud relais émettent respectivement dans des première et deuxième bandes de fréquence différentes pour coopérer. Le noeud source émet dans la première bande de fréquence un signal qui est reçu par le noeud relais. Le noeud relais traite le signal reçu pour le corriger et transmet le signal corrigé dans la deuxième bande de fréquence au noeud destinataire.

En utilisant la technique d'accès multiple par division de code CDMA ("Code Division Multiple Access" en anglais), le noeud source et un noeud relais coopèrent en utilisant deux codes d'étalement. Le noeud source émet un signal en utilisant un premier code vers le noeud relais qui le corrige. Le noeud relais transmet le signal corrigé en utilisant un deuxième code vers le noeud destinataire. Le noeud destinataire reçoit ainsi l'information du noeud relais avec un décalage temporel.

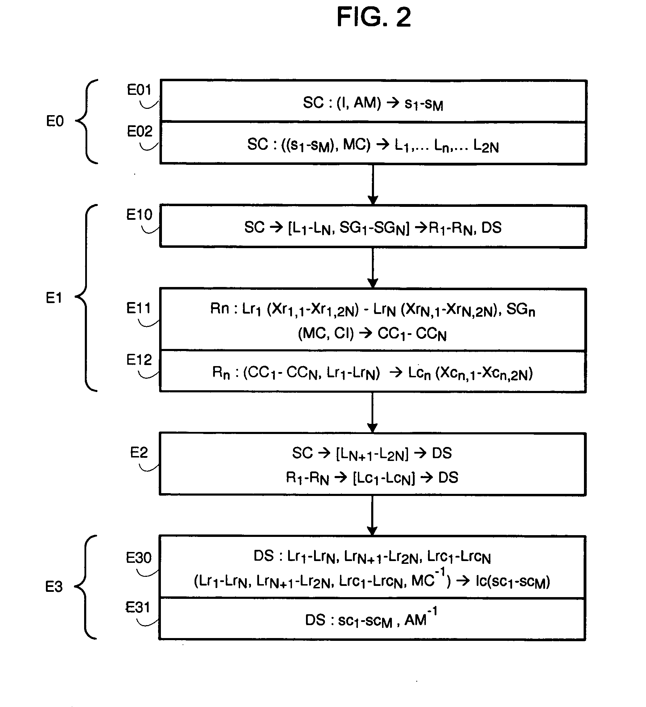

En référence à la figure 2 le procédé de codage spatio-temporel comprend des étapes E0 à E3.

A l'étape initiale E0 comprenant les étapes E01 et E02, le noeud source SC traite l'information afin de la formater pour la transmettre aux noeuds relais et au noeud destinataire aux étapes suivantes E1 et E2. A l'étape E01, l'unité de traitement US du noeud source SC lit dans la mémoire MS les B×M bits de l'information initiale I pour la moduler selon l'algorithme de modulation AM. En fonction de la constellation initiale CI relative à l'algorithme de modulation AM, l'unité US fait correspondre des mots à B bits dans l'information initiale I respectivement à M symboles $s_1$ à $s_M$.

A l'étape E02, l'unité de codage CS du noeud source SC applique la matrice de conversion MC aux symboles $s_1$ à $s_M$ afin de produire $(2N)^2$ éléments codés $X_{1,1} = \sigma_1(X_1)$ à $X_{2N,2N} = \sigma_{2N}(X_1)$ constituant le mot de code X et ainsi 2N lignes de mot de code $L_1$ à $L_{2N}$.

L'étape E1 a une durée fixe et est relative à une première phase de transmission de ligne de mot de code et comprend trois sous-étapes E10, E11 et E12.

A l'étape E10, l'unité de traitement US du noeud source SC établit N signaux contenant chacun les N premières lignes de mot de code $L_1$ à $L_N$ déterminées à l'étape précédente E02, et respectivement des données de signalisation $SG_1$ à $SG_N$ comportant par exemple des identificateurs de rang des N premières lignes de mot de code. L'interface de communication IS du noeud source SC transmet successivement les N signaux au noeud destinataire DS et à tous les noeuds relais $R_1$ à $R_N$.

A l'étape E11, dans un noeud relais $R_n$, l'interface de communication IR reçoit depuis le noeud source SC un signal contenant N lignes de mot de code reçues $Lr_1$, ..., $Lr_N$ et des données de signalisation $SG_n$. L'unité de traitement UR du noeud relais $R_n$ trouve dans les données de signalisation $SG_n$ l'identificateur de rang n de la ligne de mot de code reçue $Lr_n$ à corriger et à retransmettre au noeud destinataire. L'unité de traitement UR trouve dans la mémoire MR la constellation initiale CI et la matrice de conversion MC. L'unité de traitement UR détermine toutes les constellations codée $CC_1$ à $CC_N$ en appliquant pour chaque constellation $CC_n$ respectivement chaque ligne de la matrice MC à tous les états d'amplitude et de phase de la constellation initiale CI, afin de déterminer pour chaque ligne reçue tous les éléments codés possibles formant une nouvelle constellation codée $CC_n$ telle que définie ci-dessus et illustrée à la figure 4.

L'unité de décodage partiel du relais $R_n$ corrige, à l'étape E12, les éléments codés reçus $Xr_{n,1}$ à $Xr_{n,N}$ de la ligne $Lr_n$ identifiée par l'identificateur de rang n, en déterminant des éléments codés corrigés $Xc_{n,1}$ à $Xc_{n,N}$ par corrélation entre les éléments codés des N lignes reçues $_Lr1$ à $Lr_N$ et les éléments codés des constellations codées $CC_1$ à $CC_N$, selon les opérations suivantes.

Pour chaque élément codé reçu $Xr_{n,n}$ de la ligne $Lr_n$, l'unité DP traite chaque élément codé reçu des N lignes reçues, dépendant de la même combinaison de symbole $X_n$ que l'élément codé $Xr_{n,n}$ de la ligne $Lr_n$. Pour chaque élément codé reçu, l'unité DP compare celui-ci aux éléments codés de la constellation codée associée à la ligne contenant l'élément codé reçu. Cette comparaison repose sur une approche de maximum de vraisemblance. L'unité de décodage partiel DP détermine des distances entre l'élément codé reçu et les éléments codés de la constellation codée les plus similaires à l'élément codé reçu.-

L'unité DP combine ensuite les distances déterminées précédemment, à raison de N distances par combinaison. Chaque combinaison de distance dépend, pour chaque ligne reçue, de la distance entre un élément codé reçu et l'un des éléments codés de la constellation codée les plus similaires à l'élément codé reçu. Puis l'unité DP sélectionne l'une des combinaisons de distance ainsi constituée selon une condition prédéterminée. Par exemple, une combinaison est une addition de N distances et la condition prédéterminée est la plus petite des sommes résultant des additions. L'élément codé de la constellation codée associée à la ligne reçue $Lr_n$ ayant participé à la constitution de la combinaison sélectionnée constitue l'élément codé corrigé $Xc_{n,n}$.

Les opérations précédentes sont réitérées pour chacune des combinaisons de symboles $X_1$ à $X_N$ afin d'obtenir les éléments codés corrigés $Xc_{n,1}$ à $Xc_{n,N}$ composant la ligne corrigée $Lc_n$.

L'unité de décodage DP ne détermine pas les $(2N)^2$ symboles $s_1$ à $s_M$ à partir des 2N éléments codés transmis par le noeud source, et ne corrige que les éléments codés reçus $Xr_{n,1}$ à $Xr_{n,2N}$ dans la ligne reçue $Lr_n$.

L'étape E2 succédant à l'étape E1 a une durée fixe, comme l'étape E1. En accord avec le mode de fonctionnement à l'alternat des noeuds relais, l'interface de communication IS du noeud source SC transmet après l'étape E1 successivement au noeud destinataire DS les N dernières lignes de mot de code $L_{N+1}$ à $L_{2N}$ déterminées à l'étape E02. En synchronisme avec ces dernières lignes, les interfaces de communication IR des N noeuds relais transmettent respectivement les lignes de mot de code corrigées $Lc_1$ à $Lc_N$ au noeud destinataire DS.

L'étape E3 est exécutée dans le noeud destinataire DS qui est en écoute de lignes de mot de code, et comprend des étapes E30 et E31.

L'interface de communication ID a préalablement reçu à l'étape E10 les N premières lignes de mot de code. A l'étape E30 par analogie avec l'étape E2, l'interface de communication ID du noeud destinataire reçoit successivement les N premières lignes de mot de code corrigées $Lcr_1$ à $Lcr_N$ correspondant respectivement aux N premières lignes de mot de code corrigées $Lc_1$ à $Lc_N$ transmises respectivement par les N noeuds relais du système, et de manière simultanée et également successivement les N deuxièmes lignes de mot de code $Lr_{N+1}$ à $Lr_{2N}$ provenant du noeud source SC.

Le décodeur DD du noeud destinataire DS combine respectivement les lignes $Lcr_1$ à $Lcr_N$ aux lignes $Lr_{N+1}$ à $Lr_{2N}$, toutes ces lignes étant reçues pendant le deuxième phase. Le décodeur DD constitue une matrice résultante MR avec les N lignes de mot de code reçues $Lr_1$ à $Lr_N$ pendant la première phase et les N lignes combinées $Lcr_1$ à $Lcr_N$ et $Lr_{N+1}$ à $Lr_{2N}$ reçues pendant la seconde phase et lui applique, par exemple, la matrice de conversion inverse $MC^{-1}$ pour décoder les 2N éléments codés $X_{n,1} = \sigma^m(X_1)$ à $X_{n,2N} = \sigma^m(X_{2N})$ de chaque ligne de mot de code reçue en $(2N)^2$ symboles. Le décodage peut également être réalisé par application d'un décodeur à maximum de vraisemblance ou d'un décodeur sous optimal, par exemple un égaliseur ou décodeur sphérique.

A l'étape E31, l'unité de traitement UD applique l'algorithme de démodulation AD aux symboles décodés $sc_1$ à $sc_M$.

L'invention décrite ici concerne un procédé de codage spatio-temporel dans un système coopératif comprenant au moins un noeud source, N noeuds relais avec N égal au moins à 1 et un noeud destinataire. Elle concerne aussi deux programmes d'ordinateur aptes à être mis en oeuvre respectivement dans le noeud source et les noeuds relais du système coopératif.

Le programme d'ordinateur apte à être mis en oeuvre dans le noeud source est caractérisé en ce qu'il comprend des instructions qui lorsque le programme est exécuté dans un processeur du noeud source, dont le fonctionnement est alors commandé par l'exécution du programme, réalisent des étapes correspondant aux moyens fonctionnels inclus dans le noeud source.

Le programme d'ordinateur apte à être mis en oeuvre dans chacun des noeuds relais du système coopératif est caractérisé en ce qu'il comprend des instructions qui lorsque le programme est exécuté dans un processeur du noeud relais, dont le fonctionnement est alors commandé par l'exécution du programme, réalisent des étapes correspondant aux moyens fonctionnels inclus dans le noeud relais.

En conséquence, l'invention s'applique également à des programmes d'ordinateur, notamment des programmes d'ordinateur enregistrés sur ou dans un ou des supports d'enregistrement lisibles par un ordinateur et tout dispositif de traitement de données, adaptés à mettre en oeuvre l'invention. Ces programmes peuvent utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Un support d'enregistrement peut être n'importe quelle entité ou dispositif capable de stocker les programmes. Par exemple, le support peut comporter un moyen de stockage sur lequel sont enregistrés les programmes d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy disc) ou un disque dur.

D'autre part, le support d'enregistrement peut être un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type internet.

Alternativement, le support d'enregistrement peut être un circuit intégré dans lequel les programmes sont incorporés, le circuit étant adapté pour exécuter ou pour être utilisé dans l'exécution du procédé selon l'invention.

Reference:

1) P. Anghel et al: "Multi-user space-time coding in cooperative networks"; IEEE international conference an acoustics, speech, and signal processing; vol. 4, 06.04-10.04.2003.

**Revendications**

**1.** - Procédé pour coder des symboles d'information ($s_1$-$s_M$) dans un système coopératif comportant un noeud source (SC), N noeuds relais ($R_1$-$R_N$) et un noeud destinataire (DS), N étant au moins égal à un, **caractérisé en ce qu'**il comprend :

un codage (E02) dans le noeud source des symboles d'information par combinaisons ($X_1$-$X_{2N}$) desdits symboles en des éléments codés ($X_{1,1}$-$X_{2N,2N}$) répartis selon une matrice spatio-temporelle (X), les éléments codés de chacune des lignes et colonnes de la matrice dépendant respectivement des combinaisons desdits symboles, des transmissions (E10) de N premières lignes d'éléments codés de la matrice depuis le noeud source vers les N noeuds relais et le noeud destinataire, une correction (E12) des N premières lignes respectivement en N premières lignes corrigées dans les noeuds relais, des transmissions (E2) de N dernières lignes d'éléments codés de la matrice depuis le noeud source vers le noeud destinataire, et des transmissions (E2) des N premières lignes corrigées respectivement depuis les N noeuds relais vers le noeud destinataire.

**2.** - Procédé conforme à la revendication 1, selon lequel la correction des éléments codés de l'une respective des N premières lignes reçues dans un noeud relais ($R_n$) comprend une corrélation entre les éléments codés des N premières lignes reçues et des éléments codés prédéterminés ($CC_1$ à $CC_N$).

**3.** - Procédé conforme à la revendication 1 ou 2, comprenant dans le noeud destinataire des combinaisons deux à deux des N premières lignes corrigées dans les noeuds relais aux N dernières lignes transmises par le noeud source en des lignes combinées, et une constitution d'une matrice résultante avec les premières lignes transmises par le noeud source et les lignes combinées afin d'obtenir les symboles en dépendance de la matrice résultante.

**4.** - Système coopératif pour coder des symboles ($s_1$-$s_M$) et comportant un noeud source (SC), N noeuds relais ($R_1$-$R_N$) et un noeud destinataire (DS), N étant au moins égal à un, **caractérisé en ce qu'**il comprend :

un moyen (CS) pour coder dans le noeud source les symboles d'information par combinaisons ($X_1$-$X_{2N}$) desdits symboles en des éléments codés ($X_{1,1}$-$X_{2N,2N}$) répartis selon une matrice spatio-temporelle (X), les éléments codés de chacune des lignes et colonnes de la matrice dépendant respectivement des combinaisons desdits symboles, un moyen (IS) pour transmettre N premières lignes d'éléments codés de la matrice depuis le noeud source vers les N noeuds relais et le noeud destinataire, un moyen (DP) pour corriger des N premières lignes respectivement en N premières lignes corrigées dans les noeuds relais, un moyen (IS) pour transmettre N dernières lignes d'éléments codés de la matrice depuis le noeud source vers le noeud destinataire, et un moyen (IR) pour transmettre N premières lignes corrigées respectivement depuis les N noeuds relais vers le noeud destinataire.

**5.** - Noeud source (SC) compris dans un système coopératif pour coder des symboles ($s_1$-$s_M$), le système comportant également N noeuds relais ($R_1$-$R_N$) et un noeud destinataire (DS), N étant au moins égal à un, **caractérisé en ce qu'**il comprend :

un moyen (CS) pour coder les symboles d'information par combinaisons ($X_1$-$X_{2N}$) desdits symboles en des éléments codés ($X_{1,1}$-$X_{2N,2N}$) répartis selon une matrice spatio-temporelle (X), les éléments codés de chacune des lignes et colonnes de la matrice dépendant respectivement des combinaisons desdits symboles,

un moyen (IS) pour transmettre N premières lignes d'éléments codés de la matrice depuis le noeud source vers les N noeuds relais et le noeud destinataire, et

un moyen (IS) pour transmettre N dernières lignes d'éléments codés de la matrice depuis le noeud source vers le noeud destinataire.

**6.** - Noeud relais ($R_n$) compris dans un système coopératif pour coder des symboles ($s_1$-$s_M$), le système comportant un noeud source (SC), N noeuds relais ($R_1$-$R_N$) et un noeud destinataire (DS), N étant au moins égal à un, **caractérisé en ce qu'**il comprend :

un moyen (IR) pour recevoir N lignes d'éléments codés ($X_{n,1}$-$X_{n,2N}$) résultant du codage dans le noeud source des symboles d'information par combinaisons ($X_1$-$X_{2N}$) desdits symboles en les éléments codés répartis selon une matrice spatio-temporelle (X), les éléments codés de chacune des lignes et colonnes de la matrice dépendant respectivement des combinaisons desdits symboles,

un moyen (DP) pour corriger une des N lignes reçues en une ligne corrigée à partir des N lignes reçues, et

un moyen (IR) pour transmettre la ligne corrigée vers le noeud destinataire.

**7.** - Programme d'ordinateur apte à être mis en oeuvre dans un noeud source d'un système coopératif pour coder des symboles ($s_1$-$s_M$), le système comportant également N noeuds relais ($R_1$-$R_N$) et un noeud destinataire (DS), N étant au moins égal à un, ledit programme étant **caractérisé en ce qu'**il comprend des instructions qui lorsque le programme est exécuté dans le noeud source, réalisent :

un codage (E02) des symboles d'information par combinaisons ($X_1$-$X_{2N}$) desdits symboles en des éléments codés ($X_{1,1}$-$X_{2N,2N}$) répartis selon une matrice spatio-temporelle (X), les éléments codés de chacune des lignes et colonnes de la matrice dépendant respectivement des combinaisons desdits symboles,

des transmissions (E10) de N premières lignes d'éléments codés de la matrice depuis le noeud source vers les N noeuds relais et le noeud destinataire, et

des transmissions (E2) de N dernières lignes d'éléments codés de la matrice depuis le noeud source vers le noeud destinataire.

**8.** - Programme d'ordinateur apte à être mis en oeuvre dans un noeud relais d'un système coopératif pour coder des symboles ($s_1$-$s_M$), le système comportant un noeud source (SC), N noeuds relais ($R_1$-$R_N$) et un noeud destinataire (DS), N étant au moins égal à un, ledit programme étant **caractérisé en ce qu'**il comprend des instructions qui lorsque le programme est exécuté dans le noeud relais, réalisent :

une réception (E11) de N lignes d'éléments codés ($X_{n,1}$-$X_{n,2N}$) résultant du codage dans le noeud source des symboles d'information par combinaisons ($X_1$-$X_{2N}$) desdits symboles en les éléments codés répartis selon une matrice spatio-temporelle (X), les éléments codés de chacune des lignes et colonnes de la matrice dépendant respectivement des combinaisons desdits symboles,

une correction (E12) d'une des N lignes reçues en une ligne corrigée à partir des N lignes reçues, et

une transmission (E2) de la ligne corrigée vers le noeud destinataire.

**9.** - Support d'enregistrement lisible par un ordinateur sur lequel est enregistré un programme d'ordinateur conforme à la revendication 8.

**10.** - Support d'enregistrement lisible par un ordinateur sur lequel est enregistré un programme d'ordinateur conforme à la revendication 9.

## Claims

**1.** Method for coding information symbols ($s_1$-$s_M$) in a cooperative system comprising a source node (SC), N relay nodes ($R_1$-$R_N$) and a destination node (DS), N being at least equal to one, **characterized in that** it comprises:

a coding (E02) in the source node of the information symbols by combinations ($X_1$-$X_{2N}$) of said symbols in coded elements ($X_{1,1}$-$X_{2N,2N}$) distributed according to a space-time matrix (X), the coded elements of each of the rows and columns of the matrix respectively depending on the combinations of said symbols,

transmissions (E10) of N first rows of coded elements of the matrix from the source node to the N relay nodes and the destination node,

a correction (E12) of the N first rows respectively in N first corrected rows in the relay nodes,
transmissions (E2) of N last rows of coded elements of the matrix from the source node to the destination node, and
transmissions (E2) of the N first corrected rows respectively from the N relay nodes to the destination node.

2. Method according to Claim 1, according to which the correction of the coded elements of the respective one of the N first rows received in a relay node ($R_n$) comprises a correlation between the coded elements of the N first rows received and of the predetermined coded elements ($CC_1$ to $CC_N$).

3. Method according to Claim 1 or 2, comprising, in the destination node, paired combinations of the N first corrected rows in the relay nodes with the N last rows transmitted by the source node in combined rows, and a construction of a resultant matrix with the first rows transmitted by the source node and the combined rows in order to obtain the symbols dependent on the resulting matrix.

4. Cooperative system for coding symbols ($s_1$-$s_M$) and comprising a source node (SC), N relay nodes ($R_1$-$R_N$) and a destination node (DS), N being at least equal to one, **characterized in that** it comprises:

a means (CS) for coding in the source node the information symbols by combinations ($X_1$-$X_{2N}$) of said symbols in coded elements ($X_{1,1}$-$X_{2N,2N}$) distributed according to a space-time matrix (X), the coded elements of each of the rows and columns of the matrix respectively depending on the combinations of said symbols,
a means (IS) for transmitting N first rows of coded elements of the matrix from the source node to the N relay nodes and the destination node,
a means (DP) for correcting the N first rows respectively in N first corrected rows in the relay nodes,
a means (IS) for transmitting N last rows of coded elements of the matrix from the source node to the destination node, and
a means (IR) for transmitting N first corrected rows respectively from the N relay nodes to the destination node.

5. Source node (SC) included in a cooperative system for coding symbols ($s_1$-$s_M$), the system also comprising N relay nodes ($R_1$-$R_N$) and a destination node (DS), N being at least equal to one, **characterized in that** it comprises:

a means (CS) for coding the information symbols by combinations ($X_1$-$X_{2N}$) of said symbols in coded elements ($X_{1,1}$-$X_{2N,2N}$) distributed according to a space-time matrix (X), the coded elements of each of the rows and columns of the matrix respectively depending on the combinations of said symbols,
a means (IS) for transmitting N first rows of coded elements of the matrix from the source node to the N relay nodes and the destination node, and
a means (IS) for transmitting N last rows of coded elements of the matrix from the source node to the destination node.

6. Relay node ($R_N$) included in a cooperative system for coding symbols ($s_1$-$s_M$), the system comprising a source node (SC), N relay nodes ($R_1$-$R_N$) and a destination node (DS), N being at least equal to one, **characterized in that** it comprises:

a means (IR) for receiving N rows of coded elements ($X_{n,1}$-$X_{n,2N}$) resulting from the coding in the source node of the information symbols by combinations ($X_1$-$X_{2N}$) of said symbols in the coded elements distributed according to a space-time matrix (X), the coded elements of each of the rows and columns of the matrix respectively depending on the combinations of said symbols,
a means (DP) for correcting one of the N received rows into a corrected row from the N received rows, and
a means (IR) for transmitting the corrected row to the destination node.

7. Computer program that can be implemented in a source node of a cooperative system for coding symbols ($s_1$-$s_M$), the system also comprising N relay nodes ($R_1$-$R_N$) and a destination node (DS), N being at least equal to one, said program being **characterized in that** it comprises instructions which, when the program is run in the source node, perform:

a coding (E02) of the information symbols by combinations ($X_1$-$X_{2N}$) of said symbols into coded elements ($X_{1,1}$-$X_{2N,2N}$) distributed according to a space-time matrix (X), the coded elements of each of the rows and columns of the matrix respectively depending on the combinations of said symbols,
transmissions (E10) of N first rows of coded elements of the matrix from the source node to the N relay nodes and the destination node, and
transmissions (E2) of the N last rows of coded elements of the matrix from the source node to the destination node.

8. Computer program that can be implemented in a relay node of a cooperative system for coding symbols ($s_1$-$s_M$), the system comprising a source node (SC), N relay nodes ($R_1$-$R_N$) and a destination node (DS), N being at least equal to one, said program being **characterized in that** it comprises instructions which, when the program is run in the relay node, perform:

a reception (E11) of N rows of coded elements ($X_{n,1}$-$X_{n,2N}$) resulting from the coding in the source node of the information symbols by combinations ($X_1$-$X_{2N}$) of said symbols into the coded elements distributed according to a space-time matrix (X), the coded elements of each of the rows and columns of the matrix respectively depending on the combinations of said symbols,
a correction (E12) of one of the N received rows into a corrected row from the N received rows, and
a transmission (E2) of the corrected row to the destination node.

9. Computer-readable storage medium on which is stored a computer program according to Claim 8.

10. Computer-readable storage medium on which is stored a computer program according to Claim 9.

**Patentansprüche**

1. Verfahren zum Codieren von Informationssymbolen ($s_1$-$s_M$) in einem kooperativen System, das einen Quellenknoten (SC), N Relaisknoten ($R_1$-$R_N$) und einen Zielknoten (DS) aufweist, wobei N mindestens gleich eins ist, **dadurch gekennzeichnet, dass** es enthält:

eine Codierung (E02), im Quellenknoten, der Informationssymbole durch Kombinationen ($X_1$-$X_{2N}$) der Symbole in codierte Elemente ($X_{1,1}$, -$X_{2N,2N}$), die gemäß einer Raum-Zeit-Matrix (X) verteilt sind, wobei die codierten Elemente jeder der Zeilen und Spalten der Matrix von Kombinationen der Symbole abhängen,
Übertragungen (E10) von N ersten Zeilen von codierten Elementen der Matrix vom Quellenknoten zu den N Relaisknoten und zum Zielknoten,
eine Korrektur (E12) der N ersten Zeilen jeweils in korrigierte N erste Zeilen in den Relaisknoten,
Übertragungen (E2) von N letzten Zeilen von codierten Elementen der Matrix vom Quellenknoten zum Zielknoten, und
Übertragungen (E2) der korrigierten N ersten Zeilen von den N Relaisknoten zum Zielknoten.

2. Verfahren nach Anspruch 1, gemäß dem die Korrektur der codierten Elemente einer der in einem Relaisknoten ($R_n$) empfangenen N ersten Zeilen eine Korrelation zwischen den codierten Elementen der empfangenen N ersten Zeilen und vorbestimmten codierten Elementen ($CC_1$ bis $CC_N$) enthält.

3. Verfahren nach Anspruch 1 oder 2, das im Zielknoten paarweise Kombinationen der korrigierten N ersten Zeilen in den Relaisknoten mit den vom Quellenknoten übertragenen N letzten Zeilen in kombinierte Zeilen und eine Bildung einer resultierenden Matrix mit den ersten vom Quellenknoten übertragenen Zeilen und den kombinierten Zeilen enthält, um die Symbole in Abhängigkeit von der resultierenden Matrix zu erhalten.

4. Kooperatives System zum Codieren von Symbolen ($s_1$-$s_M$), das einen Quellenknoten (SC), N Relaisknoten ($R_1$-$R_N$) und einen Zielknoten (DS) enthält, wobei N mindestens gleich eins ist,
**dadurch gekennzeichnet, dass** es enthält:

eine Einrichtung (CS) zur Codierung im Quellenknoten der Informationssymbole durch Kombinationen ($X_1$-$X_{2N}$) der Symbole in codierte Elemente ($X_{1,1}$, -$X_{2N,2N}$), die gemäß einer Raum-Zeit-Matrix (X) verteilt sind, wobei die codierten Elemente jeder der Zeilen und Spalten der Matrix von Kombinationen der Symbole abhängen,
eine Einrichtung (IS) zur Übertragung von N ersten Zeilen von codierten Elementen der Matrix vom Quellenknoten zu den N Relaisknoten und zum Zielknoten,
eine Einrichtung (DP) zur Korrektur der N ersten Zeilen jeweils in korrigierte N erste Zeilen in den Relaisknoten,
eine Einrichtung (IS) zur Übertragung von N letzten Zeilen von codierten Elementen der Matrix vom Quellenknoten zum Zielknoten, und
eine Einrichtung (IR) zur Übertragung von korrigierten N ersten Zeilen von den N Relaisknoten zum Zielknoten.

5. Quellenknoten (SC), der in einem kooperativen System zur Codierung von Symbolen ($s_1$-$s_M$) enthalten ist, wobei das System ebenfalls N Relaisknoten ($R_1$-$R_N$) und einen Zielknoten (DS) enthält, wobei N mindestens gleich eins ist, **dadurch gekennzeichnet, dass** er enthält:

eine Einrichtung (CS) zur Codierung der Informationssymbole durch Kombinationen ($X_1$-$X_{2N}$) der Symbole in codierte Elemente ($X_{1,1}$, -$X_{2N,2N}$), die gemäß einer Raum-Zeit-Matrix (X) verteilt sind, wobei die codierten Elemente jeder der Zeilen und Spalten der Matrix von Kombinationen der Symbole abhängen,
eine Einrichtung (IS) zur Übertragung von N ersten Zeilen von codierten Elementen der Matrix vom Quellenknoten zu den N Relaisknoten und zum Zielknoten, und
eine Einrichtung (IS) zur Übertragung von N letzten Zeilen von codierten Elementen der Matrix vom Quellenknoten zum Zielknoten.

6. Relaisknoten ($R_n$), der in einem kooperativen System zur Codierung von Symbolen ($s_1$-$s_M$) enthalten ist, wobei das System einen Quellenknoten (SC), N Relaisknoten ($R_1$-$R_N$) und einen Zielknoten (DS) enthält, wobei N mindestens gleich eins ist, **dadurch gekennzeichnet, dass** er enthält:

eine Einrichtung (IR), um N Zeilen von codierten Elementen ($X_{n,1}$-$X_{n,2N}$) zu empfangen, die aus der Codierung im Quellenknoten der Informationssymbole durch Kombinationen ($X_1$-$X_{2N}$) der Symbole in die codierten Elemente resultieren, die gemäß einer Raum-Zeit-Matrix (X) verteilt sind, wobei die codierten Elemente jeder der Zeilen und Spalten der Matrix jeweils von den Kombinationen der Symbole abhängen,
eine Einrichtung (DP) zur Korrektur einer der empfangenen N Zeilen in eine korrigierte Zeile ausgehend von den empfangenen N Zeilen, und
eine Einrichtung (IR) zur Übertragung der korrigierten Zeile zum Zielknoten.

7. Computerprogramm, das in einem Quellenknoten eines kooperativen Systems durchgeführt werden kann, um Symbole ($s_1$-$s_M$) zu codieren, wobei das System ebenfalls N Relaisknoten ($R_1$-$R_N$) und einen Zielknoten (DS) aufweist, wobei N mindestens gleich eins ist, wobei das Programm **dadurch gekennzeichnet ist, dass** es Anweisungen enthält, die, wenn das Programm im Quellenknoten ausgeführt wird, realisieren:

eine Codierung (E02) der Informationssymbole durch Kombinationen ($X_1$-$X_{2N}$) der Symbole in codierte Elemente ($X_{1,1}$, -$X_{2N,2N}$), die gemäß einer Raum-Zeit-Matrix (X) verteilt sind, wobei die codierten Elemente jeder der Zeilen und Spalten der Matrix von den Kombinationen der Symbole abhängen,
Übertragungen (E10) von N ersten Zeilen von codierten Elementen der Matrix vom Quellenknoten zu den N Relaisknoten und zum Zielknoten, und
Übertragungen (E2) von N letzten Zeilen von codierten Elementen der Matrix vom Quellenknoten zum Zielknoten.

8. Computerprogramm, das in einem Relaisknoten eines kooperativen Systems durchgeführt werden kann, um Symbole ($s_1$-$s_M$) zu codieren, wobei das System einen Quellenknoten (SC), N Relaisknoten ($R_1$-$R_N$) und einen Zielknoten (DS) aufweist, wobei N mindestens gleich eins ist, wobei das Programm **dadurch gekennzeichnet ist, dass** es Anweisungen enthält, die, wenn das Programm im Relaisknoten ausgeführt wird, realisieren:

einen Empfang (E11) von N Zeilen von codierten Elementen ($X_{n,1}$-$X_{n,2N}$), die aus der Codierung im Quellenknoten der Informationssymbole durch Kombinationen ($X_1$-$X_{2N}$) der Symbole in die codierten Elemente resultieren, die gemäß einer Raum-Zeit-Matrix (X) verteilt sind, wobei die codierten Elemente jeder der Zeilen und Spalten der Matrix von den Kombinationen der Symbole abhängen,
eine Korrektur (E12) einer der empfangenen N Zeilen in eine korrigierte Zeile ausgehend von den empfangenen N Zeilen, und
eine Übertragung (E2) der korrigierten Zeile zum Zielknoten.

9. Computerlesbarer Aufzeichnungsträger, auf dem ein Computerprogramm nach Anspruch 8 aufgezeichnet ist.

10. Computerlesbarer Aufzeichnungsträger, auf dem ein Computerprogramm nach Anspruch 9 aufgezeichnet ist.

## FIG. 1

# FIG. 2

E0 {

E01: $SC : (I, AM) \rightarrow s_1\text{-}s_M$

E02: $SC : ((s_1\text{-}s_M), MC) \rightarrow L_1,\ldots L_n,\ldots L_{2N}$

E1 {

E10: $SC \rightarrow [L_1\text{-}L_N, SG_1\text{-}SG_N] \rightarrow R_1\text{-}R_N, DS$

E11: $Rn : Lr_1 (Xr_{1,1}\text{-}Xr_{1,2N}) - Lr_N (Xr_{N,1}\text{-}Xr_{N,2N}), SG_n (MC, CI) \rightarrow CC_1\text{-} CC_N$

E12: $R_n : (CC_1\text{-} CC_N, Lr_1\text{-}Lr_N) \rightarrow Lc_n (Xc_{n,1}\text{-}Xc_{n,2N})$

E2: $SC \rightarrow [L_{N+1}\text{-}L_{2N}] \rightarrow DS$
$R_1\text{-}R_N \rightarrow [Lc_1\text{-}Lc_N] \rightarrow DS$

E3 {

E30: $DS : Lr_1\text{-}Lr_N, Lr_{N+1}\text{-}Lr_{2N}, Lrc_1\text{-}Lrc_N (Lr_1\text{-}Lr_N, Lr_{N+1}\text{-}Lr_{2N}, Lrc_1\text{-}Lrc_N, MC^{-1}) \rightarrow Ic(sc_1\text{-}sc_M)$

E31: $DS : sc_1\text{-}sc_M , AM^{-1}$

# FIG. 3

# FIG. 4

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **P. Anghel et al.** Multi-user space-time coding in cooperative networks. *IEEE international conference an acoustics, speech, and signal processing,* vol. 4, 06.04-10.04